# EUROPEAN PATENT APPLICATION

(11) **EP 3 690 489 A1**
(43) Date of publication of application: **05.08.2020**
(21) Application number: 19154188.7
(22) Date of filing: 29.01.2019
(51) Int. Cl.: G01T 1/20, G01T 1/24

(54) **DUAL-SENSOR SUBPIXEL RADIATION DETECTOR**

(71) Applicant: Koninklijke Philips N.V., 5656 AG Eindhoven (NL)
(72) Inventor: JACOBS, Johannes Wilhelmus Maria, 5656 AE Eindhoven (NL)
(74) Representative: de Haan, Poul Erik

(57) **Abstract**

The present invention relates to a radiation detector (1000) comprising: two substrates (1100), wherein each substrate of the two substrates comprises a sensor (1110), wherein each sensor comprises an electronic array circuit (1112), which comprises an array of data read-out pixels (DRP) and which is configured to acquire image data resulting from exposure to radiation, the image data provided in a matrix data structure corresponding to the array of data read-out pixels; wherein each sensor comprises an array of electronic pixel circuits (1114), wherein each electronic pixel circuit is assigned to at least one pixel of the array of data read-out pixels; wherein each electronic pixel circuit (1114) comprises: an array of allocated signal elements (1114-SE); and a corresponding array of allocated radiation conversion elements (1114-RCE); wherein each allocated signal element together with one corresponding allocated radiation conversion element form one subpixel (SP); wherein each electronic pixel circuit (1114) is configured to receive subpixel data signals from each allocated signal element of the array of allocated signal elements to generate pixel data; wherein the electronic array circuit is configured to receive the pixel data from each electronic pixel circuit in order to acquire the image data; and wherein both sensors are at least partially facing each other at equidistance.

## Description

### FIELD OF THE INVENTION

The present invention relates to detectors based on hybrid detection techniques, in particular the present invention relates to a dual-sensor subpixel radiation detector.

### BACKGROUND OF THE INVENTION

In recent years, new and advanced X-ray and computed tomography, CT, applications are emerging, which require advanced imaging features such as spectral, also "multi-energy", imaging, higher dynamic range and higher spatial resolution.

Examples of advanced X-ray and CT applications are for instance spectral CT, spectral X-ray, differential phase contrast imaging, DPCI, dark field X-ray imaging, DAX, and so-called multi-modality XSPECT imaging, an integration of SPECT - single photon emission computed tomography - and CT data during image reconstruction for sharp clinical detail and accurate measurement of disease.

Current X-ray and CT-detectors have limited performance and cannot meet the required specification levels to enable these new applications at acceptable cost levels.

US 2002/054954 A1 describes a multidimensional detector array for detecting electromagnetic radiation, wherein a layer composite is produced, which has a sensor layer with a material sensitive to the radiation, and a carrier layer.

US 2010/0282972 A1 describes an indirect radiation detector for detecting radiation, the detector comprising: an array of pixels, each pixel being sub-divided into at least a first and a second sub-pixel, each sub-pixel having a cross-sectional area parallel to a surface plane of the array of pixels.

### SUMMARY OF THE INVENTION

There may be a need to overcome the drawbacks from existing implementations for X-ray detectors.

This need is met by the subject matter of the independent claims. Further exemplary embodiments are evident from the dependent claims and the following description.

A first aspect of the invention relates to a radiation detector. The radiation detector comprises two substrates, wherein each substrate of the two substrates comprises a sensor, wherein each sensor comprises an electronic array circuit, which comprises an array of data read-out pixels and which is configured to acquire image data resulting from exposure to radiation, the image data provided in a matrix data structure corresponding to the array of data read-out pixels.

For the present radiation detector, each sensor comprises an array of electronic pixel circuits, wherein each electronic pixel circuit is assigned to at least one pixel of the array of data read-out pixels; wherein each electronic pixel circuit comprises: i) an array of allocated signal elements; and a corresponding array of allocated radiation conversion elements.

Each allocated signal element together with one corresponding allocated radiation conversion element form or define one subpixel; wherein each electronic pixel circuit is configured to receive subpixel data signals from each allocated signal element of the array of allocated signal elements to generate pixel data; wherein the electronic array circuit is configured to receive the pixel data from each electronic pixel circuit in order to acquire the image data; and wherein both sensors are at least partially facing each other at equidistance.

The present invention advantageously uses a spectral detector for medical imaging which features excellent energy resolution and spatial resolution, and at the same time nearly absorbs all incident X-rays completely, i.e. absorption is close to a fraction of 100% summed up over energies in a broad X-ray spectrum incident on the detector.

Current spectral dual-layer detectors mostly comprise pixels composed of one type of "low-energy", abbreviated LE, scintillator layer and one type of "high-energy", abbreviated HE, scintillator layer. Within the detector, these scintillator layers separate LE and HE x-ray photons at the same time and place, enabling the creation, for instance also 3D reconstruction, of matching spectral and conventional, non-spectral, images simultaneously.

Optionally, the LE and HE scintillator layers are separated by an intermediate filter layer, which absorbs specific "mid-energy", abbreviated ME, -X-rays in order to increase spectral energy separation between LE and HE images.

The present invention provides a dual-sensor subpixel radiation detector with the following advantages and resolves in particular the following specific issues of spectral X-ray and CT detectors:
The present invention provides that disadvantages with regard to poor energy resolution are resolved. System based on dual-layer detector may offer lower energy resolution or spectral differentiation capability for certain specific imaging applications than spectral CT systems based on novel X-ray generation, kV switching or dual-source.

The present invention increases energy resolution of a detector by combining multiple different LE and HE radiation conversion materials and ME filters, even with different thicknesses, in a single pixel.

The present invention provides that the disadvantages concerning poor spatial resolution are resolved. Generally, spatial resolution reduces at increasing scintillator layer thickness (X-ray absorption) due to lateral spreading of optical photons generated by X-ray absorption.

Hence, this mainly applies for dual-layer X-ray detectors, e.g. the so-called European H2020 ICT photonics driven project "Next Generation X-ray Imaging System" NEXIS, a photonics driven improvement in image quality and functionality of an interventional X-ray imaging system, based on LE and HE scintillators. Caesium iodide, Ceramic type GOS scintillators have limited spatial resolution, especially in case of thick scintillator layers, which are required for sufficient X-ray absorption (> 80 %) in medical applications. The design of high-aspect-ratio subpixels from small scintillator pieces provides excellent spatial resolution even at a very thick scintillator layer.

The present invention advantageously provides a solution for problems regarding the dose loss. Spectral NDT and security imaging applications sometimes use mono- or single-layer detectors composed of pixels with different scintillator or photoconductor types in a single layer connected to a read-out sensor.

However, these are not suitable for medical imaging since a relatively large part of the X-ray spectrum incident on the detector is not absorbed, i.e. unacceptable dose loss would occur. The same argument is valid for the multi-piece mono- or single-layer detectors. The current dual-sensor approach of the present invention offers the possibility to select different scintillator photoconductor combinations, so that X-ray absorption for each subpixel is close to a fraction of up to 100% at least.

Based on the present invention, an X-ray detector may be provided based on systems which medical detector suppliers can then easily re-use the developed micro LED display technologies to realize cost-effective manufacturing of multi-piece radiation detectors. A similar transfer of key enabling technologies occurred in the past for current a-Si and CMOS flat panel detectors, derived from respective displays, LCDs, and semiconductors, CMOS image sensors.

According to an embodiment of the invention, a radiation-absorbing element is provided between at least a part of the radiation conversion elements of at least one of the two sensors of the two substrates.

According to an embodiment of the invention, at least one of the signal elements is a photodiode and at least one of the radiation conversion elements comprises a radiation conversion material in terms of a scintillator, wherein a composition of the radiation conversion material and/or a thickness of the radiation conversion material is varied between at least two subpixels.

According to an embodiment of the invention, the composition of the radiation conversion material is to be varied between the at least two subpixels assigned to one sensor pixel is at least one of the following: i) a doping level of the radiation conversion material, ii) a doping material, and/or iii) a combination of doping materials.

According to an embodiment of the invention, the radiation conversion material is caesium iodide, optionally doped with thallium, lutetium iodide, optionally doped with cerium, gadolinium oxysulfide, optionally doped with terbium or optionally doped with praseodymium, calcium tungstate, lutetium-yttrium oxyorthosilicate, sodium iodide, zinc sulfide, lutetium gadolinium gallium garnet, yttrium aluminum garnet, or bismuth germanium oxide or perovskite.

According to an embodiment of the invention, at least one of the signal elements is a conductive electrode and at least one of the radiation conversion elements is a photoconductor, wherein a composition of the photoconductor and/or a thickness the photoconductor is varied between at least two subpixels.

According to an embodiment of the invention, the composition of the photoconductor to be varied between the at least two subpixels assigned to one sensor pixel is at least one of the following: i) a doping level of the photoconductor ii) a doping material, and/or iii) a combination of doping materials.

According to an embodiment of the invention, the photoconductor is at least one of the following: i) amorphous selenium, ii) cadmium zinc telluride, iii) cadmium telluride, iv) perovskite, v) gallium arsenide, vi) mercury(II)iodide, vii) lead(II) oxide, viii) thallium(I) bromide, and ix) inorganic photoconductor nanoparticles embedded in an organic matrix.

According to an embodiment of the invention, at least two subpixels are subpixels with different dimension and/or different size and/or different distance gaps and/or different radiation conversion materials and/or different material composition between the subpixels.

According to an embodiment of the invention, the subpixels are arranged in a non-uniform distribution of the different dimension of the subpixels and/or the different size of the subpixels and/or the different distance gaps and/or the different radiation conversion materials of the subpixels and/or the different material composition between the subpixels.

According to an embodiment of the invention, the array of data read-out pixels is a one-dimensional array or a two-dimensional array.

According to an embodiment of the invention, the subpixels are configured to provide a spatial resolution, a spectral energy resolution, or a dynamic range or a spectral energy range. This advantageously provides improved X-ray detector performance.

According to an embodiment of the invention, at least one of the substrates comprises a flat, an at least substantially flat, or a curved shape. The term "substantially flat" may refer to a flatness of the surface below a certain threhold value. The term "substantially flat" may refer to flatness, which may be defined in terms of least squares fit to a plane ("statistical flatness"), worst-case or overall flatness (the distance between the two closest parallel planes within). The term "substantially flat" may refer to a flatness comprising a minimum bend radius of up to 1 cm, for example.

According to an embodiment of the invention, at least one of the substrates the substrate comprises silicon, glass or polymer foil.

These and other aspects of the invention will be apparent from and elucidated with reference to the embodiments described hereinafter.

### BRIEF DESCRIPTION OF THE DRAWINGS

Below, embodiments of the present invention are described in more detail with reference to the attached drawings.
Fig. 1 shows a schematic diagram of a pixel design according to an embodiment of the invention.
Fig. 2 shows a schematic diagram for different pixel designs of a radiation detector according to an embodiment of the invention.
Fig. 3 shows a schematic diagram for different pixel designs of a radiation detector according to an embodiment of the invention.
Fig. 4 shows a schematic diagram of a radiation detector with a base grid of 3x3 subpixels according to an embodiment of the invention.

In principle, identical or corresponding parts are provided with the same reference symbols in the figures.

### DETAILED DESCRIPTION OF EMBODIMENTS

The illustration in the drawings is schematically and not to scale. In different drawings, similar or identical elements are provided with the same reference numerals.

Generally, identical parts, units, entities or steps are provided with the same reference symbols in the figures.

The term "data read-out pixel" as used by the present invention may refer to a physical point in a raster image, or, if understood in the hardware context, the smallest addressable - at least if one considers that data processing of image data - element in an all points addressable image as provided by the sensor device, in other words, a data read-out pixel is the smallest controllable element of a picture captured by the sensor.

The term "subpixel" as used by the present invention may refer to any kind of a sub-entity of a pixel, e.g. a sub-entity of a pixel or a data read-out pixel, describing the internal structure of a pixel or the data read-out pixe, respectively.

Basically, the term "subpixel" as used by the present invention is associated with a higher resolution than can be expected in case all data read-out pixel would be formed by a single pixel. However, the information of the subpixel may not solely and directly used for the higher spatial resolution in the output image based on the data read-out pixel, but rather for a better spectral resolution of the image, for instance.

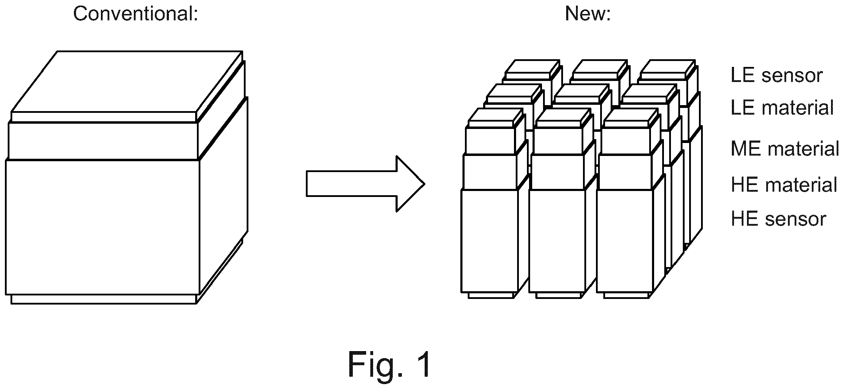

According to an embodiment of present invention, FIG. 1 shows a schematic diagram for pixel and subpixels for a radiation detector according to an embodiment of the invention. The advantages of the present invention are given by the approach to replace this standard single pixel by a pixel composed of multiple small subpixels composed of different radiation conversion materials, as shown in Fig. 1.

According to an embodiment of present invention, in particular, Fig. 1 shows the approach from pixel to subpixels. A conventional detector as shown on the left provides that a pixel is composed of single radiation conversion material, or at most, out of two materials. However, an image pixel corresponds to a sensor pixel, or in other words, a pixel in the image is based on one corresponding hardware pixel.

According to an embodiment of present invention, the detector as defined by the shown embodiment of the present invention provides that a pixel at least comprises multiple subpixels composed of different compositions or fractions of multiple conversion materials. For the conventional dual-sensor detector, the following is given: a pixel is composed of two layers of conversion material. In contrast, according to an embodiment of the invention, for the dual-sensor detector as defined by the present invention, the following is given: each data pixel comprises of multiple subpixels composed of different conversion materials.

According to an embodiment of the invention, the design of the pixels, the sensor and related detector electronics may be implemented according to demands of the radiation detector, although it will be determined to a large extent by the chosen design of the radiation conversion layer.

According to an embodiment of the invention, the signals from subpixels can be separated from each other by means of an optically reflective layer in the gap between scintillator pieces and an electrically isolating layer in the gap between photoconductor pieces.

In an indirect conversion detector the LE and HE sensor elements are photodiodes connected to respective pieces of LE and HE scintillator material, whereas in a direct conversion detector the LE and HE sensor elements are metal electrodes connected to resp. pieces of LE and HE photoconductor materials. Optionally, a piece of ME filter material is inserted between the LE and HE material pieces.

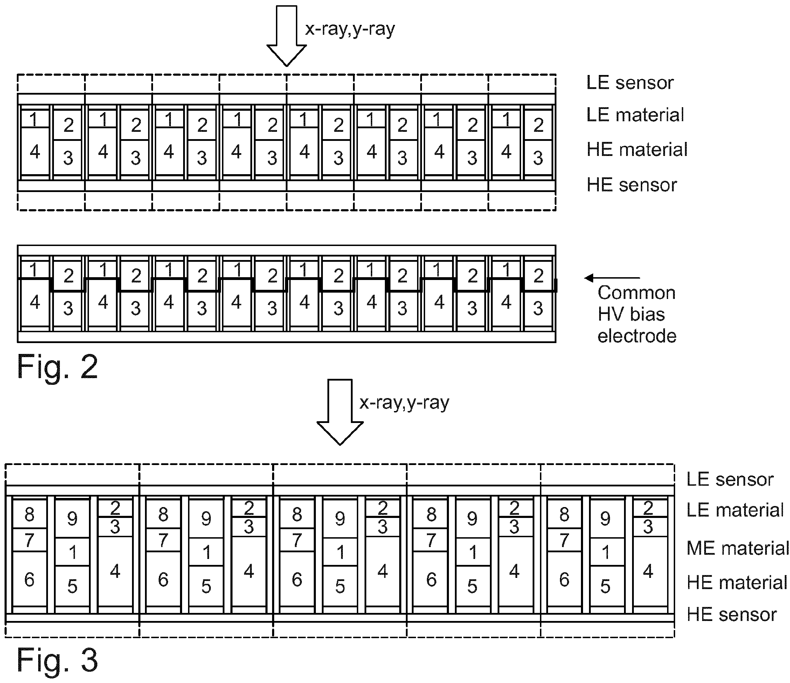

In an embodiments of the present invention, as anexample, Fig. 2 shows how a dual-sensor detector is built from simple pixels composed of 1x2 subpixels in which two different LE scintillator or photoconductor materials 1, 2 and two different HE scintillators or photoconductor materials 3, 4 are used.

According to an embodiment of present invention, in the case of direct conversion detector a common HV bias electrode needs to be applied in order to create an electric field across the LE and HE photoconductor layers. This can be realized in different ways, such as a thin metal foil, for instance aluminum or copper foil, evaporated or sputtered metal film, or a printed layer of conductive material, provided by ink-based printing, based on graphene, carbon nanotubes, Poly(3,4-ethylenedioxythiophene) (PEDOT), or Indium tin oxide (ITO, a ternary composition of indium, tin and oxygen in varying proportions).

Embodiments of the invention of radiation detectors or sensors are back-thinned CMOS image sensor, back-thinned Si photodiode arrays, and TFT backplane arrays (a-Si, IGZO, LTPS) with a-Si photodiodes on foil or thin glass substrate. Reflecting and/or isolating layers on top of LE, HE and/or ME materials and between (sub)-pixels are not shown in the figures.

Fig. 2 shows two cross-sectional views of a dual-sensor detector from pixels composed of 1x2 subpixels, built from respectively scintillator materials (top figure) and photoconductor materials (bottom figure). Fig. 2 shows on the bottom: application of a common HV bias electrode between LE and HE photoconductor layers.

Fig.3 shows an example of a dual-sensor detector built from pixels composed of 1x3 subpixels in which three different LE conversion materials 2, 8, 9 three different HE conversion materials 4 ,5, 6 and three different ME materials 1, 3, 7 are used.

According to an embodiment of present invention, ME materials can be configured to act as x-ray absorption filter to maximize energy separation between the LE and HE signals, but can also be configured to enhance the LE or HE signals. In an indirect conversion detector an ME scintillator can generate additional photons, whereas in a direct conversion detector an ME photoconductor can generate additional electrical charges.

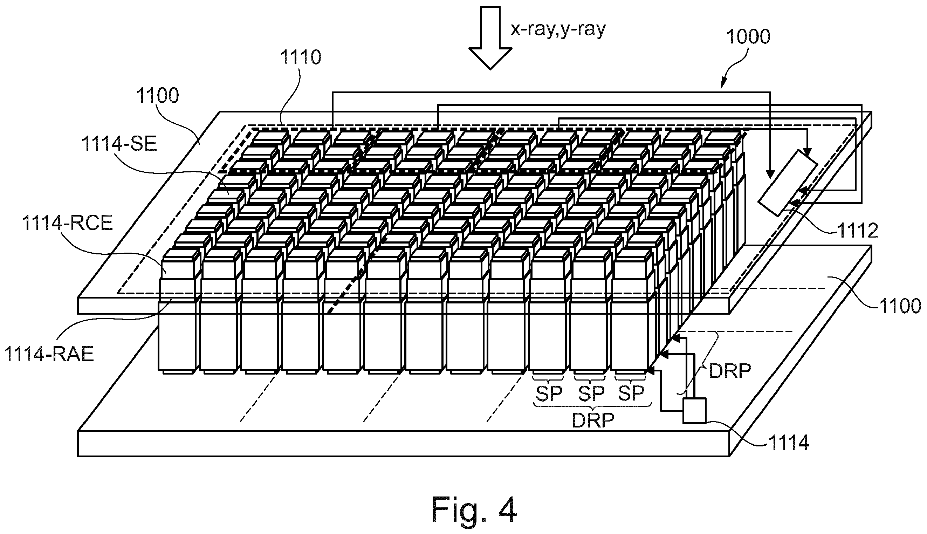

Fig. 4 shows an example of a dual-sensor detector built from pixels composed of 3x3 subpixels in which 27 different conversion materials, 9 for LE, 9 for ME and 9 for HE, are used. The dual-sensor detector according to embodiments of the present invention may be used for spectral X-ray and CT imaging applications in medical, dental, nondestructive testing to evaluate the properties of a material, component or system without causing damage, and security domains.

Fig. 4 depicts a side view of a part of the multi-piece dual-sensor detector in which an array of 4x3 pixels, each composed of 3x3 subpixels, are visible. According to an embodiment of present invention, the multi-piece assembly method offers the possibility to enhance specific features of a dual-sensor detector by optimization of design parameters such as material type, material thickness, subpixel sizes and distance gaps between subpixels.

According to an embodiment of present invention, Fig. 4 shows a radiation detector 1000 comprising two substrates 1100, wherein each substrate of the two substrates comprises a sensor 1110.

According to an embodiment of present invention each sensor comprises an electronic array circuit 1112, which comprises an array of data read-out pixels DRP and which is configured to acquire image data resulting from exposure to radiation, the image data provided in a matrix data structure corresponding to the array of data read-out pixels.

According to an embodiment of present invention, each sensor 1110 of the radiation detector 1000 comprises an array of electronic pixel circuits 1114, wherein each electronic pixel circuit is assigned to at least one pixel of the array of data read-out pixels

According to an embodiment of present invention, each electronic pixel circuit 1114 comprises:
- an array of allocated signal elements 1114-SE; and
- a corresponding array of allocated radiation conversion elements 1114-RCE.

According to an embodiment of present invention, each allocated signal element together with one or more corresponding allocated radiation conversion element form one subpixel SP. In other words, a subpixel SP may contain one or more than one scintillator (or photoconductor) material.

According to an embodiment of present invention, each electronic pixel circuit 1114 is configured to receive subpixel data signals from each allocated signal element of the array of allocated signal elements to generate pixel data. For example, the electronic array circuit is configured to receive the pixel data from each electronic pixel circuit in order to acquire the image data, wherein both sensors are at least partially facing each other at equidistance.

Fig. 4 clearly shows that the electronic array circuit 1112 comprises or is connected to an array of data read-out pixels DRP. Each data read-out pixels DRP comprises an array of subpixels SP, nine suppixels SP in Fig. 4, each subpixel SP comprises an allocated signal element together with one corresponding allocated radiation conversion element.

According to an embodiment of present invention, pixel sizes of SPECT and PET detectors are generally too large to take advantage of spatial resolution improvements, but creation of other specific advantages might be envisaged as shown in Table 1.

**Table 1**

| Function/Feature | How | Application |
|---|---|---|
| Spectral X-ray or CT detector | Small subpixels with large | Advanced 3D X-ray |
| increased energy/spatial resolution | variety of LE, ME, HE and CT applications | |
| Increased detection sensitivity | Large variety | SPECT or XPECT |
| In broader energy spectrum of LE, ME, HE | | |
| Depth of interaction (Dol) | Use stack of scintillator materials | Advanced PET |
| Measurement capability for PET detector | | |

Table 1 defines examples of using improved functions/features of a multi-piece dual-sensor detector for specific applications.

### EXAMPLES

The present invention is further explained by the following examples.

A first example is given by a radiation detector comprising:
i) a substrate;
ii) a sensor, which is coupled to the substrate, the sensor comprising:
   - a first array of sensor pixels;
   - a second array of signal read-out elements; and
   - an electronic circuitry which is configured to provide image data based on signals received from the signal read-out elements;
iii) a transducer, which is coupled to the substrate and to the sensor, the transducer comprising:
   - a third array of subpixels, wherein at least two subpixels are assigned to one sensor pixel; wherein the second array of signal read-out elements and the third array of subpixels correspond to each other; wherein each of the subpixels comprises a radiation conversion material.

A second example is given by the radiation detector according to the first example, wherein at least one of the signal read-out elements is a photodiode and the radiation conversion material of each of the subpixels is a scintillator; wherein a composition of the radiation conversion material and/or a thickness of the radiation conversion material is varied between at least two subpixels assigned to one sensor pixel.

A third example is given by the radiation detector according to the second example, wherein the composition of the radiation conversion material is to be varied between the at least two subpixels assigned to one sensor pixel is at least one of the following: i) a doping level of the radiation conversion material, ii) a doping material, and/or iii) a combination of doping materials.

A fourth example is given by the radiation detector according to the second or third example, wherein the radiation conversion material is caesium iodide, optionally doped with thallium, lutetium iodide, optionally doped with cerium, gadolinium oxysulfide, optionally doped with terbium or optionally doped with praseodymium, calcium tungstate, lutetium-yttrium oxyorthosilicate, sodium iodide, zinc sulfide, lutetium gadolinium gallium garnet, yttrium aluminum garnet, or bismuth germanium oxide.

A fifth example is given by the radiation detector according to any one of the precedings examples, wherein at least one of the signal read-out elements is a conductive electrode and the radiation conversion material of each of the subpixels is a photoconductor, wherein a composition of the photoconductor and/or a thickness the photoconductor is varied between at least two subpixels assigned to one sensor pixel.

A sixth example is given by the radiation detector according to any one of the precedings examples, wherein the composition of the photoconductor to be varied between the at least two subpixels assigned to one sensor pixel is at least one of the following: i) a doping level of the photoconductor ii) a doping material, and/or iii) a combination of doping materials.

A seventh example is given by the radiation detector according to any one of the precedings examples, wherein the photoconductor is at least one of the following: i) amorphous selenium, ii) cadmium zinc telluride, iii) cadmium telluride, iv) perovskite, v) gallium arsenide, vi) mercury(II)iodide, vii) lead(II) oxide, viii) thallium(I) bromide, and ix) inorganic photoconductor nanoparticles embedded in an organic matrix.

An eighth example is given by the radiation detector according to any one of the precedings examples, wherein the at least two subpixels assigned to one sensor pixel are subpixels with different dimension and/or different size and/or different distance gaps and/or different radiation conversion materials and/or different material composition between the subpixels.

A ninth example is given by the radiation detector according to any one of the precedings examples, wherein the third array comprises a non-uniform distribution of the different dimension of the subpixels and/or the different size of the subpixels and/or the different distance gaps and/or the different radiation conversion materials of the subpixels and/or the different material composition between the subpixels.

A tenth example is given by the radiation detector according to any one of the precedings examples, wherein the first array of sensor pixels and/or the second array of signal read-out elements and/or the third array of subpixels is a two-dimensional array.

A eleventh example is given by the radiation detector according to any one of the preceding examples, wherein the first array of sensor pixels and/or the second array of signal read-out elements and/or the third array of subpixels is a one-dimensional array.

A twelfth example is given by the radiation detector according to any one of the preceding examples, wherein the second array of signal read-out elements and/or the third array of subpixels define a subarray scheme of the first array of sensor pixels.

A thirteenth example is given by the radiation detector according to any one of the preceding examples, wherein the second array of signal read-out elements and/or the third array of subpixels are configured to provide a spatial resolution, a spectral energy resolution, or a dynamic range or a spectral energy range.

A fourteenth example is given by the radiation detector according to any one of the preceding examples, wherein the substrate comprises a flat or a substantially flat or a curved shape.

A fourteenth example is given by the radiation detector according to any one of the preceding examples, wherein the substrate comprises silicon, glass or polymer foil.

It has to be noted that embodiments of the invention are described with reference to different subject matters. In particular, some embodiments are described with reference to method type claims whereas other embodiments are described with reference to the device type claims.

However, a person skilled in the art will gather from the above and the following description that, unless otherwise notified, in addition to any combination of features belonging to one type of subject matter also any combination between features relating to different subject matters is considered to be disclosed with this application. However, all features can be combined providing synergetic effects that are more than the simple summation of the features.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art and practicing the claimed invention, from a study of the drawings, the disclosure, and the appended claims.

In the claims, the word "comprising" does not exclude other elements or steps, and the indefinite article "a" or "an" does not exclude a plurality. A single processor or controller or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope.

## Claims

1. A radiation detector (1000) comprising:
- two substrates (1100),
- wherein each substrate of the two substrates comprises a sensor (1110),
- wherein each sensor (1110) comprises an electronic array circuit (1112), which comprises an array of data read-out pixels (DRP) and which is configured to acquire image data resulting from exposure to radiation, the image data provided in a matrix data structure corresponding to the array of data read-out pixels (DRP);
- wherein each sensor (1110) comprises an array of electronic pixel circuits (1114), wherein each electronic pixel circuit (1114) is assigned to at least one pixel of the array of data read-out pixels (DRP);
- wherein each electronic pixel circuit (1114) comprises:
i) an array of allocated signal elements (1114-SE); and
ii) a corresponding array of allocated radiation conversion elements (1114-RCE);
wherein each allocated signal element (1114-SE) together with one corresponding allocated radiation conversion element (1114-RCE) form one subpixel (SP);
- wherein each electronic pixel circuit (1114) is configured to receive subpixel data signals from each allocated signal element (1114-SE) of the array of allocated signal elements (1114-SE) to generate pixel data;
- wherein the electronic array circuit (1112) is configured to receive the pixel data from each electronic pixel circuit (1114) in order to acquire the image data; and
- wherein both sensors (1110) are at least partially facing each other at equidistance.

2. The radiation detector according to claim 1,
wherein a radiation absorbing element (1114-RAE) is provided between at least a part of the radiation conversion elements (1114-RCE) of at least one of the two sensors (1110) of the two substrates (1100).

3. The radiation detector according to claim 1 or 2,
wherein at least one of the allocated signal elements (1114-SE) is a photodiode and at least one of the radiation conversion elements comprises a radiation conversion material in terms of a scintillator; wherein a composition of the radiation conversion material and/or a thickness of the radiation conversion material is varied between at least two subpixels (SP).

4. The radiation detector according to claim 3,
wherein the composition of the radiation conversion material is to be varied between the at least two subpixels (SP) assigned to one sensor pixel is at least one of the following: i) a doping level of the radiation conversion material, ii) a doping material, and/or iii) a combination of doping materials.

5. The radiation detector according to claim 3 or 4,
wherein the radiation conversion material is caesium iodide, optionally doped with thallium, lutetium iodide, optionally doped with cerium, gadolinium oxysulfide, optionally doped with terbium or optionally doped with praseodymium, calcium tungstate, lutetium-yttrium oxyorthosilicate, sodium iodide, zinc sulfide, lutetium gadolinium gallium garnet, yttrium aluminum garnet, or bismuth germanium oxide or perovskite.

6. The radiation detector according to any one of claims 1 or 2,
wherein at least one of the allocated signal elements (1114-SE) is a conductive electrode and at least one of the radiation conversion elements is a photoconductor, wherein a composition of the photoconductor and/or a thickness the photoconductor is varied between at least two subpixels (SP).

7. The radiation detector according to claim 6,
wherein the composition of the photoconductor to be varied between the at least two subpixels (SP) assigned to one sensor pixel is at least one of the following: i) a doping level of the photoconductor ii) a doping material, and/or iii) a combination of doping materials.

8. The radiation detector according to claims 6 or 7,
wherein the photoconductor is at least one of the following: i) amorphous selenium, ii) cadmium zinc telluride, iii) cadmium telluride, iv) perovskite, v) gallium arsenide, vi) mercury(II)iodide, vii) lead(II) oxide, viii) thallium(I) bromide, and ix) inorganic photoconductor nanoparticles embedded in an organic matrix.

9. The radiation detector according to any one of the preceding claims,
wherein at least two subpixels (SP) are subpixels (SP) with different dimension and/or different size and/or different distance gaps and/or different radiation conversion materials and/or different material composition between the subpixels (SP).

10. The radiation detector according to claim 9,
wherein the subpixels (SP) are arranged in a non-uniform distribution of the different dimension of the subpixels (SP) and/or the different size of the subpixels (SP) and/or the different distance gaps and/or the different radiation conversion materials of the subpixels (SP) and/or the different material composition between the subpixels (SP).

11. The radiation detector according to any one of the preceding claims,
wherein the array of data read-out pixels (DRP) is a one-dimensional array or a two-dimensional array.

12. The radiation detector according to any one of the preceding claims,
wherein the subpixels (SP) are configured to provide a spatial resolution, a spectral energy resolution, or a dynamic range or a spectral energy range.

13. The radiation detector according to any one of the preceding claims,
wherein at least one of the substrates (1100) comprises a flat or a substantially flat or a curved shape.

14. The radiation detector according to any one of the preceding claims,
wherein at least one of the substrates (1100) comprises silicon, glass or polymer foil.
